# EUROPEAN PATENT APPLICATION

(11) **EP 4 654 737 A1**
(43) Date of publication of application: **26.11.2025**
(21) Application number: 23917202.6
(22) Date of filing: 23.11.2023
(51) Int. Cl.: H04W 76/14, H04W 64/00

(54) **ANCHOR POINT TERMINAL DETERMINATION METHOD AND APPARATUS, AND STORAGE MEDIUM**

(30) Priority: 19.01.2023 CN 202310098139
(71) Applicant: Datang Mobile Communications Equipment Co., Ltd., Beijing 100085 (CN)
(72) Inventor: ZHANG, Huiying, Beijing 100085 (CN)
(74) Representative: Studio Torta S.p.A.
(86) International application number: PCT/CN2023/133694
(87) International publication number: WO 2024/152734

(57) **Abstract**

Provided in the embodiments of the present disclosure are an anchor point terminal determination method and apparatus, and a storage medium. The method comprises: determining a candidate anchor point terminal; and measuring the candidate anchor point terminal, so as to determine measurement result information, wherein the measurement result information is used for determining an anchor point terminal.

## Description

### CROSS-REFERENCES TO RELATED APPLICATIONS

The present application claims priority to Chinese patent application No. 202310098139.3 filed on January 19, 2023, entitled "Anchor Point Terminal Determination Method and Apparatus, and Storage Medium", which is hereby incorporated by reference in its entirety.

### FIELD

The present application relates to the field of communications, and in particular, to methods and apparatuses for anchor user equipment (UE) determination and a storage medium.

### BACKGROUND

With development of wireless multimedia services, people's demand for high data rates and user experience is growing, which puts forward higher requirements on system capacity and coverage of traditional cellular networks. Meanwhile, application scenarios such as public safety, social networks, short-range data sharing, and local advertising have also led to a gradual increase in people's demand for proximity services. In order to support a wider range of communication applications and services, relay communication based on sidelink (SL) may expand coverage and improve power consumption. Sidelink communication refers to a way that neighbor terminals may transmit data over a sidelink within a short range. A wireless interface corresponding to the sidelink is called a direct communication interface, which is also called a sidelink interface or a PC5 interface.

The 3rd generation partnership project (3GPP) introduces SL positioning, which may calculate, by measuring an SL positioning signal between a target user equipment (UE) and an anchor UE, a relative location and an absolute location of the target UE. In case that SL positioning is used between UEs, the target UE may obtain location information through a variety of positioning methods. The target UE may need to receive SL-positioning reference signals (SL-PRS) from multiple anchor UEs, and the target UE may also need to send SL-PRSs to multiple anchor UEs. However, in the related art, an anchor UE corresponding to the target UE cannot be determined, which leads to an inability of SL positioning.

### BRIEF SUMMARY

Embodiments of the present application provide methods and apparatuses for anchor user equipment (UE) determination and storage mediums, to solve a problem in the related art that an anchor UE cannot be determined, which leads to an inability of SL positioning.

An embodiment of the present application provides a method for anchor user equipment (UE) determination, performed by a target UE, including:
determining a candidate anchor UE; and
performing measurement on the candidate anchor UE, and determining measurement result information, where the measurement result information is used to determine the anchor UE.

In some embodiments, the method further includes:
determining the anchor UE based on the measurement result information.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the method further includes:
sending the measurement result information to a positioning server device; and
obtaining anchor UE information sent from the positioning server device, where the anchor UE information is related to an anchor UE determined based on the measurement result information.

In some embodiments, the method further includes:
sending positioning capability information of the target UE to the positioning server device.

In some embodiments, in case that the positioning server device is a server UE, the measurement result information is sent to the server UE through one or more of the following messages:
a sidelink positioning protocol (SLPP) message;
a PC5-location services (PC5-LCS) message;
a PC5-signaling (PC5-S) message;
a PC5-radio resource control (PC5-RRC) message; or
a sidelink media access control control element (SL MAC CE) message.

In some embodiments, in case that the positioning server device is a core network element, the measurement result information is sent to the core network element through one or more of the following messages:
a long term evolution positioning protocol (LPP) message;
a sidelink positioning protocol (SLPP) message;
a location services (LCS) message; or
a non-access stratum (NAS) message.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

In some embodiments, determining the candidate anchor UE includes:
determining a signal quality of a target object performing sidelink (SL) discovery or SL communication or SL broadcast or SL synchronization signal; and
determining a target object whose signal quality satisfies a first condition as the candidate anchor UE.

In some embodiments, the first condition includes one or more of the following conditions:
a signal quality is greater than a first threshold; or
a signal quality ranks top M among signal qualities sorted in a descending order, where M is a positive integer.

An embodiment of the present application further provides a method for anchor user equipment (UE) determination, performed by a positioning server device, including:
obtaining measurement result information, sent from a target UE, determined after performing measurement on a candidate anchor UE;
determining an anchor UE based on the measurement result information, and generating anchor UE information; and
sending the anchor UE information to the target UE.

In some embodiments, the method further includes:
obtaining positioning capability information of the target UE sent from the target UE.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

An embodiment of the present application further provides a target user equipment (UE), including a memory, a transceiver and a processor,
where the memory is used for storing a computer program, the transceiver is used for receiving and sending data under control of the processor, and the processor is used for reading the computer program in the memory and performing the following operations:
determining a candidate anchor UE; and
performing measurement on the candidate anchor UE, and determining measurement result information, where the measurement result information is used to determine the anchor UE.

In some embodiments, the processor is further used for reading the computer program in the memory and performing the following operations:
determining the anchor UE based on the measurement result information.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the processor is further used for reading the computer program in the memory and performing the following operations:
sending the measurement result information to a positioning server device; and
obtaining anchor UE information sent from the positioning server device, where the anchor UE information is related to an anchor UE determined based on the measurement result information.

In some embodiments, the processor is further used for reading the computer program in the memory and performing the following operations:
sending positioning capability information of the target UE to the positioning server device.

In some embodiments, in case that the positioning server device is a server UE, the measurement result information is sent to the server UE through one or more of the following messages:
a sidelink positioning protocol (SLPP) message;
a PC5-location services (PC5-LCS) message;
a PC5-signaling (PC5-S) message;
a PC5-radio resource control (PC5-RRC) message; or
a sidelink media access control control element (SL MAC CE) message.

In some embodiments, in case that the positioning server device is a core network element, the measurement result information is sent to the core network element through one or more of the following messages:
a long term evolution positioning protocol (LPP) message;
a sidelink positioning protocol (SLPP) message;
a location services (LCS) message; or
a non-access stratum (NAS) message.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

In some embodiments, determining the candidate anchor UE includes:
determining a signal quality of a target object performing sidelink (SL) discovery or SL communication or SL broadcast or SL synchronization signal; and
determining a target object whose signal quality satisfies a first condition as the candidate anchor UE.

In some embodiments, the first condition includes one or more of the following conditions:
a signal quality is greater than a first threshold; or
a signal quality ranks top M among signal qualities sorted in a descending order, where M is a positive integer.

An embodiment of the present application provides a positioning server device, including a memory, a transceiver and a processor,
where the memory is used for storing a computer program, the transceiver is used for receiving and sending data under control of the processor, and the processor is used for reading the computer program in the memory and performing the following operations:
obtaining measurement result information, sent from a target user equipment (UE), determined after performing measurement on a candidate anchor UE;
determining an anchor UE based on the measurement result information, and generating anchor UE information; and
sending the anchor UE information to the target UE.

In some embodiments, the processor is further used for reading the computer program in the memory and performing the following operations:
obtaining positioning capability information of the target UE sent from the target UE.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

An embodiment of the present application provides an apparatus for anchor user equipment (UE) determination, including:
a first determining module, used for determining a candidate anchor UE; and
a second determining module, used for performing measurement on the candidate anchor UE, and determining measurement result information, where the measurement result information is used to determine the anchor UE.

In some embodiments, the apparatus further includes:
a fourth determining module, used for determining the anchor UE based on the measurement result information.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the apparatus further includes:
a second sending module, used for sending the measurement result information to a positioning server device; and
a second obtaining module, used for obtaining anchor UE information sent from the positioning server device, where the anchor UE information is related to an anchor UE determined based on the measurement result information.

In some embodiments, the apparatus further includes:
a third sending module, used for sending positioning capability information of a target UE to the positioning server device.

In some embodiments, in case that the positioning server device is a server UE, the measurement result information is sent to the server UE through one or more of the following messages:
a sidelink positioning protocol (SLPP) message;
a PC5-location services (PC5-LCS) message;
a PC5-signaling (PC5-S) message;
a PC5-radio resource control (PC5-RRC) message; or
a sidelink media access control control element (SL MAC CE) message.

In some embodiments, in case that the positioning server device is a core network element, the measurement result information is sent to the core network element through one or more of the following messages:
a long term evolution positioning protocol (LPP) message;
a sidelink positioning protocol (SLPP) message;
a location services (LCS) message; or
a non-access stratum (NAS) message.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

In some embodiments, the first determining module is further used for:
determining a signal quality of a target object performing sidelink (SL) discovery or SL communication or SL broadcast or SL synchronization signal; and
determining a target object whose signal quality satisfies a first condition as the candidate anchor UE.

In some embodiments, the first condition includes one or more of the following conditions:
a signal quality is greater than a first threshold; or
a signal quality ranks top M among signal qualities sorted in a descending order, where M is a positive integer.

An embodiment of the present application provides an apparatus for anchor user equipment (UE) determination, including:
a first obtaining module, used for obtaining measurement result information, sent from a target UE, determined after performing measurement on a candidate anchor UE;
a third determining module, used for determining an anchor UE based on the measurement result information, and generating anchor UE information; and
a first sending module, used for sending the anchor UE information to the target UE.

In some embodiments, the apparatus further includes:
a third obtaining module, used for obtaining positioning capability information of the target UE sent from the target UE.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

An embodiment of the present application further provides a processor-readable storage medium, where the processor-readable storage medium stores a computer program, and the computer program is used to cause a processor to perform steps of the method for anchor UE determination performed by the target UE or the method for anchor UE determination performed by the positioning server device described above.

An embodiment of the present application further provides a computer-readable storage medium, where the computer-readable storage medium stores a computer program, and the computer program is used to cause a computer to perform steps of the method for anchor UE determination performed by the target UE or the method for anchor UE determination performed by the positioning server device described above.

An embodiment of the present application further provides a communication device-readable storage medium, where the communication device-readable storage medium stores a computer program, and the computer program is used to cause a communication device to perform steps of the method for anchor UE determination performed by the target UE or the method for anchor UE determination performed by the positioning server device described above.

An embodiment of the present application further provides a chip product-readable storage medium, where the chip product-readable storage medium stores a computer program, and the computer program is used to cause a chip product to perform steps of the method for anchor UE determination performed by the target UE or the method for anchor UE determination performed by the positioning server device described above.

In the methods and apparatuses for anchor UE determination and storage mediums provided by the embodiments of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

### BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.
FIG. 1 is a first schematic flowchart of a method for anchor user equipment (UE) determination according to an embodiment of the present application;
FIG. 2 is a schematic flowchart of a location management function (LMF) selecting an anchor user equipment (UE) for a target UE according to an embodiment of the present application;
FIG. 3 is a schematic flowchart of a server user equipment (UE) selecting an anchor UE for a target UE according to an embodiment of the present application;
FIG. 4 is a second schematic flowchart of a method for anchor user equipment (UE) determination according to an embodiment of the present application;
FIG. 5 is a schematic structural diagram of a target user equipment (UE) according to an embodiment of the present application;
FIG. 6 is a schematic structural diagram of a positioning server device according to an embodiment of the present application;
FIG. 7 is a first schematic structural diagram of an apparatus for anchor user equipment (UE) determination according to an embodiment of the present application; and
FIG. 8 is a second schematic structural diagram of an apparatus for anchor user equipment (UE) determination according to an embodiment of the present application.

### DETAILED DESCRIPTION

The 3rd generation partnership project (3GPP) introduces sidelink (SL) positioning, which may calculate, by measuring an SL positioning signal between a target user equipment (UE) and an anchor UE, a relative location and an absolute location of the target UE. In case that SL positioning is used between UEs, the target UE may obtain location information through a variety of positioning methods. The target UE may need to receive SL-positioning reference signals (SL-PRS) from multiple anchor UEs, and the target UE may also need to send SL-PRSs to multiple anchor UEs. That is, SL positioning may be a procedure between two UEs or between multiple UEs. Similarly, interaction of SL positioning information may also occur between multiple UEs. For positioning for one target UE, it is necessary to determine which anchor UEs a positioning operation is performed between.

In order to make purposes, solutions and advantages of embodiments of the present application clearer, solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

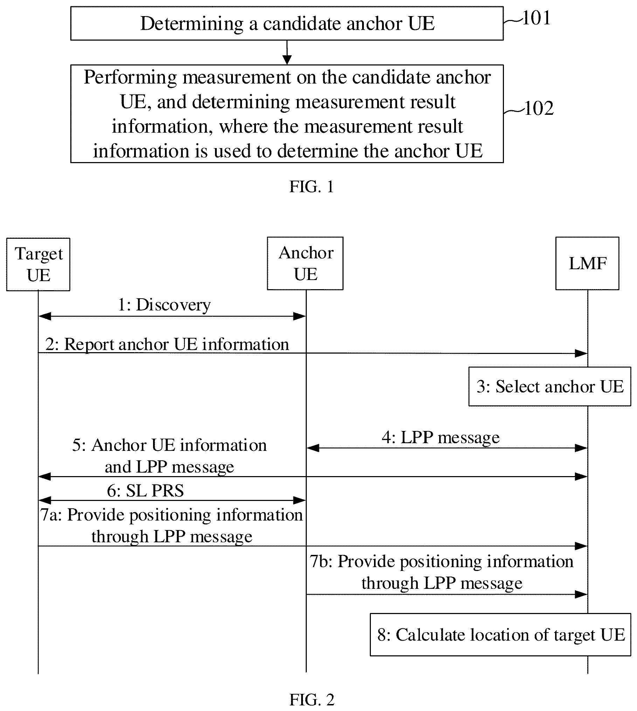

FIG. 1 is a first schematic flowchart of a method for anchor user equipment (UE) determination according to an embodiment of the present application. As shown in FIG. 1, an embodiment of the present application provides a method for anchor UE determination, performed by a target UE, and including the following steps.

Step 101: determining a candidate anchor UE.

In some embodiments, the target UE monitors a discovery resource, receives discovery information of a neighbor UE, and obtains whether it may be taken as a candidate anchor UE from the received discovery information. The target UE also performs quality measurement on the received discovery information, and takes all UEs having an anchor UE capability, whose signal strength is higher than a configured or pre-configured threshold value, as a set of candidate anchor UEs.

Furthermore, not limited to the discovery information, quality measurement may be performed on SL communication or SL broadcast or SL synchronization signal of the neighbor UE. All UEs having an anchor UE capability, whose signal strength is higher than the configured or pre-configured threshold value, are taken as a set of candidate anchor UEs, or all UEs having an anchor UE capability, whose signal quality ranks top M among signal qualities sorted in a descending order may be taken as a set of candidate anchor UEs, where M is a positive integer. A larger signal quality represents a better signal quality, and a smaller signal quality represents a worse signal quality.

For example, all UEs having an anchor UE capability, whose sidelink-reference signal receiving power (SD-RSRP) is higher than the configured or pre-configured threshold value, are taken as a set of candidate anchor UEs.

Step 102: performing measurement on the candidate anchor UE, and determining measurement result information, where the measurement result information is used to determine the anchor UE.

In some embodiments, the target UE performs measurement on each candidate anchor UE and obtains measurement result information. The measurement result information includes information such as identification information of the candidate anchor UE, part of or all of information during performing a sidelink (SL) discovery procedure, a signal quality of the candidate anchor UE, positioning capability information of the target UE, etc. Based on capabilities of the target UE itself, the target UE may determine the anchor UE by itself based on the measurement result information, or the target UE may determine the anchor UE through a server UE or a location management function (LMF).

Part of or all of the information during performing the SL discovery procedure may include information such as a positioning method supported by the candidate anchor UE, whether a location of the candidate anchor UE is known or unknown, whether the candidate anchor UE is stationary or moving, location information of the candidate anchor UE, whether the candidate anchor UE is online or offline, and serving cell information of the candidate anchor UE being online. The server UE refers to a UE that at least has the following functions: supporting calculation, capable of determining a positioning method, capable of selecting an anchor UE, and capable of distributing and receiving messages. The server UE may be a candidate anchor UE, an anchor UE, or a target UE.

For example, in case that the target UE is not a server UE, the target UE may send the measurement result information to the server UE, and the server UE selects one or more anchor UEs for the target UE and informs the target UE of these anchor UEs.

For another example, in case that the target UE is not a server UE, the target UE may send the measurement result information to the LMF, and the LMF selects one or more anchor UEs for the target UE and informs the target UE of these anchor UEs.

For another example, in case that the target UE is a server UE, the target UE determines the anchor UE by itself based on the measurement result information.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

In some embodiments, the method further includes:
determining the anchor UE based on the measurement result information.

In some embodiments, in case that the target UE has the following functions: supporting calculation, capable of determining a positioning method, capable of selecting an anchor UE, and capable of distributing and receiving messages, the target UE may determine the anchor UE by itself based on the measurement result information. At this time, the target UE may be regarded as the server UE.

In the method for anchor UE determination provided by the embodiment of the present application, during an SL communication procedure, a method for selecting the anchor UE corresponding to the target UE is clarified, to enable the target UE to determine the anchor UE, which solves a problem of how the target UE should determine the anchor UE during an SL positioning procedure, thereby enabling SL positioning to proceed smoothly and obtaining more accurate positioning results.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the target UE performs measurement on each candidate anchor UE and obtains measurement result information. The measurement result information includes information such as identification information of the candidate anchor UE, part of or all of information during performing a sidelink (SL) discovery procedure, a signal quality of the candidate anchor UE, etc. Part of or all of the information during performing the SL discovery procedure may include information such as a positioning method supported by the candidate anchor UE, whether a location of the candidate anchor UE is known or unknown, whether the candidate anchor UE is stationary or moving, location information of the candidate anchor UE, whether the candidate anchor UE is online or offline, and serving cell information of the candidate anchor UE being online.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

In some embodiments, the method further includes:
sending the measurement result information to a positioning server device; and
obtaining anchor UE information sent from the positioning server device, where the anchor UE information is related to an anchor UE determined based on the measurement result information.

In some embodiments, in case that the target UE is not a server UE, the target UE may send the measurement result information to the LMF or server UE. The LMF or server UE receives the measurement result information sent from the target UE and selects one or more anchor UEs for the target UE based on the measurement result information. The LMF or server UE then sends determined anchor UE information to the target UE, and informs the target UE of using which UEs to perform SL positioning.

Furthermore, in case that the target UE sends measurement result information to the LMF or the server UE, positioning capability information of the target UE may be included in the same message as the candidate anchor UE information, or may be a sidelink positioning protocol (SLPP) message independent of the candidate anchor UE information.

For example, in case that the target UE is not a server UE, the target UE may send the measurement result information to the server UE, and the server UE selects one or more anchor UEs for the target UE and informs the target UE of these anchor UEs.

For another example, in case that the target UE is not a server UE, the target UE may send the measurement result information to the LMF, and the LMF selects one or more anchor UEs for the target UE and informs the target UE of these anchor UEs.

In the method for anchor UE determination provided by the embodiment of the present application, during an SL communication procedure, a method for selecting the anchor UE corresponding to the target UE is clarified to enable the LMF or the server UE to select the anchor UE for the target UE, which solves a problem of how the target UE should determine the anchor UE during an SL positioning procedure, thereby enabling SL positioning to proceed smoothly and obtaining more accurate positioning results.

In some embodiments, the method further includes:
sending positioning capability information of the target UE to the positioning server device.

In some embodiments of the present application, the positioning capability information of the target UE is independent of the SLPP message of the candidate anchor UE information.

In the method for anchor UE determination provided by the embodiment of the present application, the positioning capability information of the target UE is independent of the SLPP message of the candidate anchor UE information, which enables the positioning server device to obtain the positioning capability of the target UE more timely, thereby improving efficiency of determining the anchor UE.

In some embodiments, in case that the positioning server device is a server UE, the measurement result information is sent to the server UE through one or more of the following messages:
a sidelink positioning protocol (SLPP) message;
a PC5-location services (PC5-LCS) message;
a PC5-signaling (PC5-S) message;
a PC5-radio resource control (PC5-RRC) message; or
a sidelink media access control control element (SL MAC CE) message.

In some embodiments, in case that the target UE is not a server UE, the target UE may send the measurement result information to the server UE, and the server UE selects one or more anchor UEs for the target UE and informs the target UE of these anchor UEs. These interaction procedures may transmit information through an SLPP message, a PC5-LCS message, a PC5-S message, a PC5-RRC message, or an SL MAC CE message.

For example, the target UE may send the measurement result information to the server UE through an SLPP message.

For another example, the target UE may send the measurement result information to the server UE through a PC5-LCS message.

For another example, the target UE may send the measurement result information to the server UE through a PC5-S message.

For another example, the server UE may send the anchor UE information to the target UE through a PC5-RRC message.

For another example, the server UE may send the anchor UE information to the target UE through an SL MAC CE message.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

In some embodiments, in case that the positioning server device is a core network element, the measurement result information is sent to the core network element through one or more of the following messages:
a long term evolution positioning protocol (LPP) message;
a sidelink positioning protocol (SLPP) message;
a location services (LCS) message; or
a non-access stratum (NAS) message.

In some embodiments, in case that the target UE is not a server UE, the target UE may send the measurement result information to the LMF, and the LMF selects one or more anchor UEs for the target UE and informs the target UE of these anchor UEs. These interaction procedures may transmit information through an LPP messages, an SLPP messages, an LCS messages or an NAS messages.

For example, the target UE may send the measurement result information to the LMF through an SLPP message.

For another example, the target UE may send the measurement result information to the LMF through an LPP message.

For another example, the LMF may send the anchor UE information to the target UE through an LCS message.

For another example, the LMF may send the anchor UE information to the target UE through an NAS message.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

In some embodiments, a criterion for selecting an anchor UE from candidate anchor UEs may be a combination of at least one or more of the following criterion: a candidate anchor UE supporting a to-be-performed positioning way; a candidate anchor UE having a known location; a candidate anchor UE in a stationary state; a candidate anchor UE whose moving speed is lower than a second threshold; N candidate anchor UEs having a largest signal quality among signal qualities sorted based on the measurement result information , where N is a positive integer; an online candidate anchor UE; a candidate anchor UE supporting establishing an SL unicast connection with a server UE; or a candidate anchor UE supporting establishing a connection with a server LMF of the target UE, etc. The candidate anchor UE supporting a to-be-performed positioning way is determined based on the positioning capability information of the target UE.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

In some embodiments, determining the candidate anchor UE includes:
determining a signal quality of a target object performing sidelink (SL) discovery or SL communication or SL broadcast or SL synchronization signal; and
determining a target object whose signal quality satisfies a first condition as the candidate anchor UE.

In some embodiments, the target UE monitors a discovery resource, receives discovery information of a neighbor UE, and obtains whether it may be taken as a candidate anchor UE from the received discovery information. The target UE also performs quality measurement on the received discovery information, and takes all UEs having an anchor UE capability, whose signal strength satisfies the first condition, as a set of candidate anchor UEs.

Furthermore, not limited to the discovery information, quality measurement may be performed on SL communication, SL broadcast or SL synchronization signal of the neighbor UE. All UEs having an anchor UE capability, whose signal strength satisfies the first condition, are taken as a set of candidate anchor UEs. The neighbor UE that performs SL discovery, SL communication, SL broadcast or SL synchronization signal may be taken as a target object.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

In some embodiments, the first condition includes one or more of the following conditions:
a signal quality is greater than a first threshold; or
a signal quality ranks top M among signal qualities sorted in a descending order, where M is a positive integer.

In some embodiments, the first condition may be that the signal quality is greater than the first threshold. In this case, all UEs having an anchor UE capability, whose signal strength is higher than a configured or pre-configured threshold value, may be taken as a set of candidate anchor UEs. The first condition may also be that the signal quality ranks top M in a descending order. In this case, all UEs having an anchor UE capability, whose signal quality ranks top M among signal qualities sorted in a descending order may be taken as a set of candidate anchor UEs, where M is a positive integer.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

The method in the above embodiments is further described below with reference to several specific examples.

Example 1: a LMF selects an anchor UE for a target UE.

FIG. 2 is a schematic flowchart of a location management function (LMF) selecting an anchor user equipment (UE) for a target UE according to an embodiment of the present application. As shown in FIG. 2, a procedure of the method is as follows.
1. The target UE monitors a discovery resource, receives discovery information of a neighbor UE, and obtains whether it may be taken as a candidate anchor UE from the received discovery information. The target UE also performs quality measurement on the received discovery information, and takes all UEs having an anchor UE capability, whose SD-RSRP is higher than a configured or pre-configured threshold, as a set of candidate anchor UEs.
   The discovery between the target UE and the candidate anchor UE may be discovery of model A or mode B. The target UE may trigger the discovery procedure based on positioning requirements or not based on positioning requirements. The target UE periodically performs the discovery procedure and maintains the set of candidate anchor UEs.
2. The target UE sends candidate anchor UE information to the LMF, which includes information of at least one candidate anchor UE. For each candidate anchor UE, one or a combination of the following information may be included:
   an identifier of the candidate anchor UE: may be a PC5 interface identifier, such as a layer-2 ID of the candidate anchor UE, or a positioning device identifier, such as a packet radio unit (PRU) ID;
   a location of the candidate anchor UE is known or unknown;
   a location of the candidate anchor UE is fixed or moving;
   a location of the candidate anchor UE;
   whether the candidate anchor UE is online or offline;
   serving cell information of the candidate anchor UE;
   a measurement result of an SD-RSRP of the candidate anchor UE;
   positioning capability information of the target UE; or
   a distance between the target UE and the candidate anchor UE.
   The target UE may use an LPP message, an LCS message, or an NAS message to send candidate anchor UE information to the LMF. Before the target UE sends the candidate anchor UE information to the LMF, the LMF may request the target UE for reporting information, which includes anchor UE recommendations, or a list of candidate anchor UEs, measurement values of candidate anchor UEs, or other types of request information.
3. The LMF selects a positioning method and one or more anchor UEs for the target UE based on the candidate anchor UE information and the positioning capability information of the target UE received from the target UE, as well as the information that the LMF has held about the candidate anchor UEs. A specific selection criterion may be one or a combination of the following:
   a candidate anchor UE that supports a selected positioning method;
   a candidate anchor UE having a known location;
   a stationary candidate anchor UE;
   a candidate anchor UEs whose moving speed is lower than a threshold;
   several candidate anchor UEs having good quality among qualities sorted based on a measurement result; or
   an online candidate anchor UE.
4. The LMF performs an LPP interaction with one or more anchor UEs selected in step 3, which may include a capability interaction, an auxiliary data interaction, an SL-PRS configuration interaction, etc.
5. LPP interaction is performed between the LMF and the target UE, which includes information of one or more anchor UEs and corresponding auxiliary data, an SL-PRS configuration, etc.
6. SL positioning measurement is performed between the target UE and one or more anchor UEs.
7. The target UE (represented as step 7a in FIG. 2) and/or the anchor UE (represented as step 7b in FIG. 2) sends the measurement result to the LMF.
8. The LMF calculates a location of the target UE.

A positioning information interaction between the target UE, the anchor UE and the LMF may be through an LPP message, an SLPP message, or an LPP message encapsulating an SLPP message. The location calculation of the target UE may also be performed on the target UE or the anchor UE. In this case, the location of the target UE may be obtained in step 6, and step 7 and step 8 are no longer required.

Example 2: a server UE selects an anchor UE for a target UE.

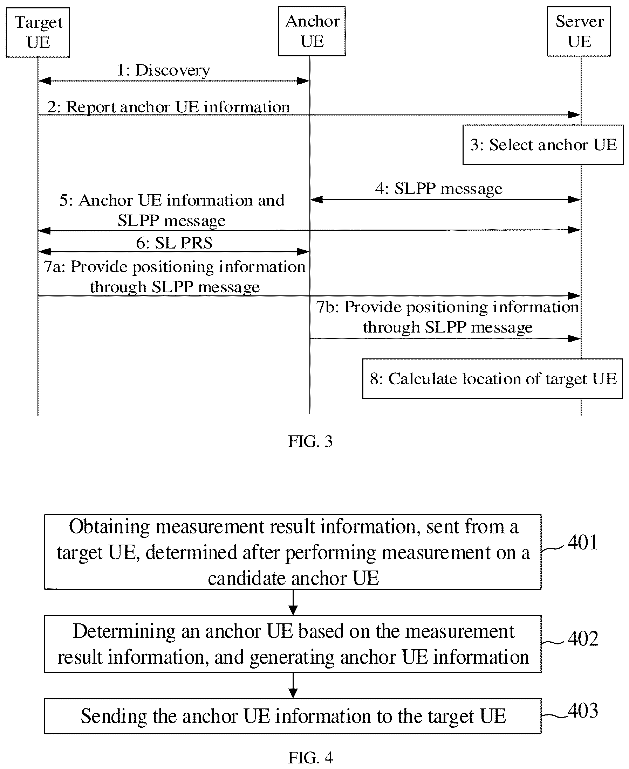

FIG. 3 is a schematic flowchart of a server user equipment (UE) selecting an anchor UE for a target UE according to an embodiment of the present application. As shown in FIG. 3, a procedure of the method is as follows.
1. The target UE monitors a discovery resource, receives discovery information of a neighbor UE, and obtains whether it may be taken as a candidate anchor UE from the received discovery information. The target UE also performs quality measurement on the received discovery information, and takes all UEs having an anchor UE capability, whose SD-RSRP is higher than a configured or pre-configured threshold, as a set of candidate anchor UEs.
   The discovery between the target UE and the candidate anchor UE may be discovery of model A or mode B. The target UE may trigger the discovery procedure based on positioning requirements or not based on positioning requirements. The target UE periodically performs the discovery procedure and maintains the set of candidate anchor UEs.
2. The target UE sends candidate anchor UE information to a server UE, which includes information of at least one candidate anchor UE. For each candidate anchor UE, one or a combination of the following information may be included:
   an identifier of the candidate anchor UE: may be a PC5 interface identifier, such as a layer-2 ID of the candidate anchor UE, or a positioning device identifier, such as a packet radio unit (PRU) ID;
   a location of the candidate anchor UE is known or unknown;
   a location of the candidate anchor UE is fixed or moving;
   a location of the candidate anchor UE;
   whether the candidate anchor UE is online or offline;
   serving cell information of the candidate anchor UE;
   a measurement result of an SD-RSRP of the candidate anchor UE;
   positioning capability information of the target UE; or
   a distance between the target UE and the candidate anchor UE.
   The target UE may use an SLPP message, an SL-LCS message, a PC5-S message, a PC5-RRC message or an SL MAC CE message to send candidate anchor UE information to the server UE. Before the target UE sends the candidate anchor UE information to the server UE, the server UE may request the target UE for reporting information, which includes anchor UE recommendations, or a list of candidate anchor UEs, measurement values of candidate anchor UEs, or other types of request information.
3. The server UE selects a positioning method and one or more anchor UEs for the target UE based on the candidate anchor UE information and the positioning capability information of the target UE received from the target UE, as well as the information that the server UE has held about the candidate anchor UEs. A specific selection criterion may be one or a combination of the following:
   a candidate anchor UE that supports a selected positioning method;
   a candidate anchor UE having a known location;
   a stationary candidate anchor UE;
   a candidate anchor UEs whose moving speed is lower than a threshold;
   several candidate anchor UEs having good quality among qualities sorted based on a measurement result; or
   an online candidate anchor UE.
4. The server UE performs an SLPP interaction with one or more anchor UEs selected in step 3, which may include a capability interaction, an auxiliary data interaction, an SL-PRS configuration interaction, etc.
5. SLPP interaction is performed between the server UE and the target UE, which includes information of one or more anchor UEs and corresponding auxiliary data, an SL-PRS configuration, etc.
6. SL positioning measurement is performed between the target UE and one or more anchor UEs.
7. The target UE (represented as step 7a in FIG. 3) and/or the anchor UE (represented as step 7b in FIG. 3) sends the measurement result to the server UE.
8. The server UE calculates a location of the target UE.

In the method for anchor UE determination provided by the embodiment of the present application, during an SL communication procedure, a method for selecting the anchor UE corresponding to the target UE is clarified, which solves a problem of how the target UE should determine the anchor UE during an SL positioning procedure, thereby enabling SL positioning to proceed smoothly and obtaining more accurate positioning results.

FIG. 4 is a second schematic flowchart of a method for anchor user equipment (UE) determination according to an embodiment of the present application. As shown in FIG. 4, an embodiment of the present application provides a method for anchor UE determination, performed by a positioning server device, and including the following steps.

Step 401: obtaining measurement result information, sent from a target UE, determined after performing measurement on a candidate anchor UE.

Step 402: determining an anchor UE based on the measurement result information, and generating anchor UE information.

Step 403: sending the anchor UE information to the target UE.

In some embodiments, the method further includes:
obtaining positioning capability information of the target UE sent from the target UE.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

The method for anchor UE determination provided by the embodiment of the present application may refer to the above-mentioned method embodiment performed by the target UE, and may achieve the same effect. The parts and beneficial effects of this embodiment that are the same as the above-mentioned corresponding method embodiments would not be described in detail here.

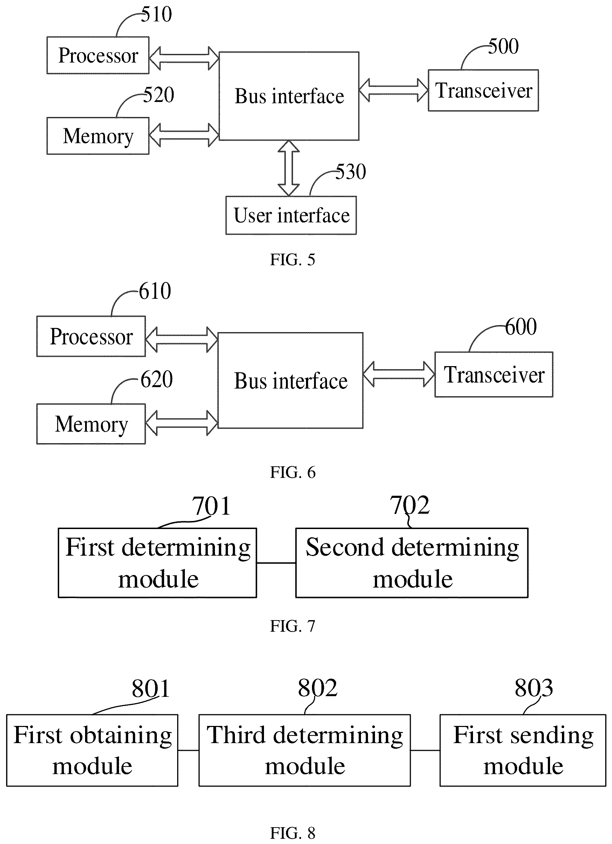

FIG. 5 is a schematic structural diagram of a target user equipment (UE) according to an embodiment of the present application. As shown in FIG. 5, the target UE includes a memory 520, a transceiver 500, and a processor 510,
where the memory 520 is used for storing a computer program, the transceiver 500 is used for receiving and sending data under control of the processor 510, and the processor 510 is used for reading the computer program in the memory 520 and performing the following operations:
determining a candidate anchor UE; and
performing measurement on the candidate anchor UE, and determining measurement result information, where the measurement result information is used to determine the anchor UE.

In some embodiments, the transceiver 500 is used for receiving and sending data under the control of the processor 510.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits, etc., which are well known in the art, and therefore are not further described in the present application. A bus interface provides an interface. The transceiver 500 may include multiple elements, i.e., including a transmitter and a receiver, units for providing communication with various other devices over transmission media including wireless channels, wired channels, fiber optic cables, and the like. For different user devices, a user interface 530 may also be an interface capable of externally or internally connecting required devices, and the connected devices include but are not limited to a small keypad, a display, a speaker, a microphone, a joystick, and the like.

The processor 510 is responsible for managing the bus architecture and general processing, and the memory 520 may store data used by the processor 510 when performing operations.

In some embodiments, the processor 510 may be a central processing unit (CPU), an application specific integrated circuit (ASIC), a field programmable gate array (FPGA) or a complex programmable logic device (CPLD). The processor may also adopt a multi-core architecture.

The processor calls the computer program stored in the memory to perform any of the methods provided by the embodiments of the present application according to an obtained executable instruction. The processor and the memory may also be arranged physically separately.

In some embodiments, the processor is further used for reading the computer program in the memory and performing the following operations:
determining the anchor UE based on the measurement result information.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the processor is further used for reading the computer program in the memory and performing the following operations:
sending the measurement result information to a positioning server device; and
obtaining anchor UE information sent from the positioning server device, where the anchor UE information is related to an anchor UE determined based on the measurement result information.

In some embodiments, the processor is further used for reading the computer program in the memory and performing the following operations:
sending positioning capability information of the target UE to the positioning server device.

In some embodiments, in case that the positioning server device is a server UE, the measurement result information is sent to the server UE through one or more of the following messages:
a sidelink positioning protocol (SLPP) message;
a PC5-location services (PC5-LCS) message;
a PC5-signaling (PC5-S) message;
a PC5-radio resource control (PC5-RRC) message; or
a sidelink media access control control element (SL MAC CE) message.

In some embodiments, in case that the positioning server device is a core network element, the measurement result information is sent to the core network element through one or more of the following messages:
a long term evolution positioning protocol (LPP) message;
a sidelink positioning protocol (SLPP) message;
a location services (LCS) message; or
a non-access stratum (NAS) message.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

In some embodiments, determining the candidate anchor UE includes:
determining a signal quality of a target object performing sidelink (SL) discovery or SL communication or SL broadcast or SL synchronization signal; and
determining a target object whose signal quality satisfies a first condition as the candidate anchor UE.

In some embodiments, the first condition includes one or more of the following conditions:
a signal quality is greater than a first threshold; or
a signal quality ranks top M among signal qualities sorted in a descending order, where M is a positive integer.

The above-mentioned target UE provided by the embodiment of the present application may implement all method steps implemented by the method embodiment performed by the target UE, and may achieve the same effect. The parts and beneficial effects of this embodiment that are the same as the method embodiment would not be described in detail here.

FIG. 6 is a schematic structural diagram of a positioning server device according to an embodiment of the present application. As shown in FIG. 6, the positioning server device includes a memory 620, a transceiver 600 and a processor 610,
where the memory 620 is used for storing a computer program, the transceiver 600 is used for receiving and sending data under control of the processor 610, and the processor 610 is used for reading the computer program in the memory 620 and performing the following operations:
obtaining measurement result information, sent from a target user equipment (UE), determined after performing measurement on a candidate anchor UE;
determining an anchor UE based on the measurement result information, and generating anchor UE information; and
sending the anchor UE information to the target UE.

In some embodiments, the transceiver 600 is used for receiving and sending data under control of the processor 610.

In FIG. 6, a bus architecture may include any number of interconnected buses and bridges, which are linked together through various circuits of one or more processors represented by the processor 600 and one or more memories represented by the memory 620. The bus architecture may also link together various other circuits, such as peripherals, voltage regulators, and power management circuits, etc., which are well known in the art, and therefore are not further described in the present application. A bus interface provides an interface. The transceiver 610 may include multiple elements, i.e., including a transmitter and a receiver, units for providing communication with various other devices over transmission media including wireless channels, wired channels, fiber optic cables, and the like. The processor 600 is responsible for managing the bus architecture and general processing, and the memory 620 may store data used by the processor 600 when performing operations.

The processor 610 may be a central processing unit (CPU), an application specific integrated circuit (ASIC), a field programmable gate array (FPGA) or a complex programmable logic device (CPLD). The processor may also adopt a multi-core architecture.

In some embodiments, the processor is further used for reading the computer program in the memory and performing the following operations:
obtaining positioning capability information of the target UE sent from the target UE.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

The above-mentioned positioning server device provided by the embodiment of the present application may implement all the method steps implemented by the method embodiment performed by the positioning server device, and may achieve the same effect. The parts and beneficial effects of this embodiment that are the same as those of the method embodiment would not be described in detail here.

FIG. 7 is a first schematic structural diagram of an apparatus for anchor user equipment (UE) determination according to an embodiment of the present application. As shown in FIG. 7, the apparatus for anchor UE determination provided by an embodiment of the present application includes a first determining module 701 and a second determining module 702,
where the first determining module 701 is used for determining a candidate anchor UE; and
the second determining module 702 is used for performing measurement on the candidate anchor UE, and determining measurement result information, where the measurement result information is used to determine the anchor UE.

In some embodiments, the apparatus further includes:
a fourth determining module, used for determining the anchor UE based on the measurement result information.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the apparatus further includes:
a second sending module, used for sending the measurement result information to a positioning server device; and
a second obtaining module, used for obtaining anchor UE information sent from the positioning server device, where the anchor UE information is related to an anchor UE determined based on the measurement result information.

In some embodiments, the apparatus further includes:
a third sending module, used for sending positioning capability information of a target UE to the positioning server device.

In some embodiments, in case that the positioning server device is a server UE, the measurement result information is sent to the server UE through one or more of the following messages:
a sidelink positioning protocol (SLPP) message;
a PC5-location services (PC5-LCS) message;
a PC5-signaling (PC5-S) message;
a PC5-radio resource control (PC5-RRC) message; or
a sidelink media access control control element (SL MAC CE) message.

In some embodiments, in case that the positioning server device is a core network element, the measurement result information is sent to the core network element through one or more of the following messages:
a long term evolution positioning protocol (LPP) message;
a sidelink positioning protocol (SLPP) message;
a location services (LCS) message; or
a non-access stratum (NAS) message.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

In some embodiments, the first determining module is further used for:
determining a signal quality of a target object performing sidelink (SL) discovery or SL communication or SL broadcast or SL synchronization signal; and
determining a target object whose signal quality satisfies a first condition as the candidate anchor UE.

In some embodiments, the first condition includes one or more of the following conditions:
a signal quality is greater than a first threshold; or
a signal quality ranks top M among signal qualities sorted in a descending order, where M is a positive integer.

The above-mentioned apparatus for anchor UE determination provided by the embodiment of the present application may implement all the method steps implemented by the method embodiment performed by the target UE, and may achieve the same effect. The parts and beneficial effects of this embodiment that are the same as the method embodiment would not be described in detail here.

FIG. 8 is a second schematic structural diagram of an apparatus for anchor user equipment (UE) determination according to an embodiment of the present application. As shown in FIG. 8, the present application embodiment provides an apparatus for anchor UE determination, including a first obtaining module 801, a third determining module 802 and a first sending module 803,
where the first obtaining module 801 is used for obtaining measurement result information, sent from a target UE, determined after performing measurement on a candidate anchor UE;
the third determining module 802 is used for determining an anchor UE based on the measurement result information, and generating anchor UE information; and
the first sending module 803 is used for sending the anchor UE information to the target UE.

In some embodiments, the apparatus further includes:
a third obtaining module, used for obtaining positioning capability information of the target UE sent from the target UE.

In some embodiments, the measurement result information includes one or more of the following information:
identification information of the candidate anchor UE;
part of or all of information during performing a sidelink (SL) discovery procedure; or
a signal quality of the candidate anchor UE.

In some embodiments, the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, where N is a positive integer;
an online candidate anchor UE;
a candidate anchor UE supporting establishing a sidelink (SL) unicast connection with a server UE; or
a candidate anchor UE supporting establishing a connection with a server location management function (LMF) of the target UE.

The above-mentioned apparatus for anchor UE determination provided by the embodiment of the present application may implement all the method steps implemented by the method embodiment performed by the positioning server device, and may achieve the same effect. The parts and beneficial effects of this embodiment that are the same as those of the method embodiment would not be described in detail here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment further provides a computer-readable storage medium, where the computer-readable storage medium stores a computer program, and the computer program is used to cause a computer to perform the method for anchor UE determination provided by the above-mentioned method embodiments.

The above-mentioned computer-readable storage medium provided by the embodiment of the present application may implement all the method steps implemented by the above-mentioned method embodiments, and may achieve the same effect. The parts and beneficial effects of this embodiment that are the same as the method embodiment would not be described in detail here.

The computer-readable storage medium may be any available medium or data storage device that may be accessed by a computer, including but not limited to magnetic storage (such as floppy disks, hard disks, magnetic tapes, magneto-optical disks (MO), etc.), optical storage (such as CD, DVD, BD, HVD, etc.), and semiconductor storage (such as ROM, EPROM, EEPROM, non-volatile memory (NAND FLASH), solid-state drive (SSD)), etc.

The terms "first", "second", etc. in the embodiments of the present application are used to distinguish similar objects, and are not used to describe a specific order or sequence. Terms used in this way may be interchangeable under appropriate circumstances, so that embodiments of the present application may be implemented in an order other than those illustrated or described herein, and objects distinguished by "first" and "second" are generally of the same type, and the number of objects is not limited. For example, the first object may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in embodiments of the present application refers to two or more than two, and other quantifiers are similar thereto.

"Determine B based on A" in the present application means that the factor A should be considered when determining B. It is not limited to "B may be determined only based on A", but should also include: "determine B based on A and C", "determine B based on A, C and E", "determine C based on A, and further determine B based on C", etc. It may also include taking A as a condition for determining B, for example, "in case that A satisfies a first condition, use a first method to determine B"; for another example, "in case that A satisfies a second condition, determine B", etc.; for another example, "in case that A satisfies a third condition, determine B based on a first parameter", etc. It may also be a condition that takes A as a factor for determining B, for example, "in case that A satisfies a first condition, use a first method to determine C, and further determine B based on C", etc.

The solutions provided by the embodiments of the present application may be applied to a variety of systems, especially 5th generation mobile communication technology (5G) systems. For example, the applicable systems may include a global system of mobile communication (GSM) system, a code division multiple access (CDMA) system, a wideband code division multiple access (WCDMA), general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems all include a terminal device and a network device. The system may further include a core network part, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of the terminal device may also be different. For example, in a 5G system, the terminal device may be called a user equipment (UE). A wireless terminal device may communicate with one or more core networks (CNs) via a radio access network (RAN). A wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may include devices such as personal communication service (PCS) phones, cordless phones, session initiated protocol (SIP) phones, wireless local loop (WLL) stations, personal digital assistants (PDAs), etc. The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminals may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for anchor user equipment, UE, determination, performed by a target UE, comprising:
determining a candidate anchor UE; and
performing measurement on the candidate anchor UE, and determining measurement result information, wherein the measurement result information is used to determine the anchor UE.

2. The method of claim 1, further comprising:
determining the anchor UE based on the measurement result information.

3. The method of claim 2, wherein the measurement result information comprises one or more of the following information:
identification information of the candidate anchor UE;
part of or all of information during performing a sidelink, SL, discovery procedure; or
a signal quality of the candidate anchor UE.

4. The method of claim 1, further comprising:
sending the measurement result information to a positioning server device; and
obtaining anchor UE information sent from the positioning server device, wherein the anchor UE information is related to an anchor UE determined based on the measurement result information.

5. The method of claim 4, further comprising:
sending positioning capability information of the target UE to the positioning server device.

6. The method of claim 4, wherein in case that the positioning server device is a server UE, the measurement result information is sent to the server UE through one or more of the following messages:
a sidelink positioning protocol, SLPP, message;
a PC5-location services, PC5-LCS, message;
a PC5-signaling, PC5-S, message;
a PC5-radio resource control, PC5-RRC, message; or
a sidelink media access control control element, SL MAC CE, message.

7. The method of claim 4, wherein in case that the positioning server device is a core network element, the measurement result information is sent to the core network element through one or more of the following messages:
a long term evolution positioning protocol, LPP, message;
a sidelink positioning protocol, SLPP, message;
a location services, LCS, message; or
a non-access stratum, NAS, message.

8. The method of claim 1, wherein the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, wherein N is a positive integer;
an online candidate anchor UE;
a candidate anchor UE supporting establishing a sidelink, SL, unicast connection with a server UE; or
a candidate anchor UE supporting establishing a connection with a server location management function, LMF, of the target UE.

9. The method of claim 1, wherein determining the candidate anchor UE comprises:
determining a signal quality of a target object performing sidelink, SL, discovery or SL communication or SL broadcast or SL synchronization signal; and
determining a target object whose signal quality satisfies a first condition as the candidate anchor UE.

10. The method of claim 9, wherein the first condition comprises one or more of the following conditions:
a signal quality is greater than a first threshold; or
a signal quality ranks top M among signal qualities sorted in a descending order, wherein M is a positive integer.

11. A method for anchor user equipment, UE, determination, performed by a positioning server device, comprising:
obtaining measurement result information, sent from a target UE, determined after performing measurement on a candidate anchor UE;
determining an anchor UE based on the measurement result information, and generating anchor UE information; and
sending the anchor UE information to the target UE.

12. The method of claim 11, further comprising:
obtaining positioning capability information of the target UE sent from the target UE.

13. The method of claim 11, wherein the measurement result information comprises one or more of the following information:
identification information of the candidate anchor UE;
part of or all of information during performing a sidelink, SL, discovery procedure; or
a signal quality of the candidate anchor UE.

14. The method of claim 11, wherein the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, wherein N is a positive integer;
an online candidate anchor UE;
a candidate anchor UE supporting establishing a sidelink, SL, unicast connection with a server UE; or
a candidate anchor UE supporting establishing a connection with a server location management function, LMF, of the target UE.

15. A target user equipment, UE, comprising a memory, a transceiver and a processor,
wherein the memory is used for storing a computer program, the transceiver is used for receiving and sending data under control of the processor, and the processor is used for reading the computer program in the memory and performing the following operations:
determining a candidate anchor UE; and
performing measurement on the candidate anchor UE, and determining measurement result information, wherein the measurement result information is used to determine the anchor UE.

16. The target UE of claim 15, wherein the processor is further used for reading the computer program in the memory and performing the following operations:
determining the anchor UE based on the measurement result information.

17. The target UE of claim 16, wherein the measurement result information comprises one or more of the following information:
identification information of the candidate anchor UE;
part of or all of information during performing a sidelink, SL, discovery procedure; or
a signal quality of the candidate anchor UE.

18. The target UE of claim 15, wherein the processor is further used for reading the computer program in the memory and performing the following operations:
sending the measurement result information to a positioning server device; and
obtaining anchor UE information sent from the positioning server device, wherein the anchor UE information is related to an anchor UE determined based on the measurement result information.

19. The target UE of claim 18, wherein the processor is further used for reading the computer program in the memory and performing the following operations:
sending positioning capability information of the target UE to the positioning server device.

20. The target UE of claim 18, wherein in case that the positioning server device is a server UE, the measurement result information is sent to the server UE through one or more of the following messages:
a sidelink positioning protocol, SLPP, message;
a PC5-location services, PC5-LCS, message;
a PC5-signaling, PC5-S, message;
a PC5-radio resource control, PC5-RRC, message; or
a sidelink media access control control element, SL MAC CE, message.

21. The target UE of claim 18, wherein in case that the positioning server device is a core network element, the measurement result information is sent to the core network element through one or more of the following messages:
a long term evolution positioning protocol, LPP, message;
a sidelink positioning protocol, SLPP, message;
a location services, LCS, message; or
a non-access stratum, NAS, message.

22. The target UE of claim 15, wherein the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, wherein N is a positive integer;
an online candidate anchor UE;
a candidate anchor UE supporting establishing a sidelink, SL, unicast connection with a server UE; or
a candidate anchor UE supporting establishing a connection with a server location management function, LMF, of the target UE.

23. The target UE of claim 15, wherein determining the candidate anchor UE comprises:
determining a signal quality of a target object performing sidelink, SL, discovery or SL communication or SL broadcast or SL synchronization signal; and
determining a target object whose signal quality satisfies a first condition as the candidate anchor UE.

24. The target UE of claim 23, wherein the first condition comprises one or more of the following conditions:
a signal quality is greater than a first threshold; or
a signal quality ranks top M among signal qualities sorted in a descending order, wherein M is a positive integer.

25. A positioning server device, comprising a memory, a transceiver and a processor,
wherein the memory is used for storing a computer program, the transceiver is used for receiving and sending data under control of the processor, and the processor is used for reading the computer program in the memory and performing the following operations:
obtaining measurement result information, sent from a target user equipment, UE, determined after performing measurement on a candidate anchor UE;
determining an anchor UE based on the measurement result information, and generating anchor UE information; and
sending the anchor UE information to the target UE.

26. The positioning server device of claim 25, wherein the processor is further used for reading the computer program in the memory and performing the following operations:
obtaining positioning capability information of the target UE sent from the target UE.

27. The positioning server device of claim 25, wherein the measurement result information comprises one or more of the following information:
identification information of the candidate anchor UE;
part of or all of information during performing a sidelink, SL, discovery procedure; or
a signal quality of the candidate anchor UE.

28. The positioning server device of claim 25, wherein the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, wherein N is a positive integer;
an online candidate anchor UE;
a candidate anchor UE supporting establishing a sidelink, SL, unicast connection with a server UE; or
a candidate anchor UE supporting establishing a connection with a server location management function, LMF, of the target UE.

29. An apparatus for anchor user equipment, UE, determination, comprising:
a first determining module, used for determining a candidate anchor UE; and
a second determining module, used for performing measurement on the candidate anchor UE, and determining measurement result information, wherein the measurement result information is used to determine the anchor UE.

30. The apparatus of claim 29, further comprising:
a fourth determining module, used for determining the anchor UE based on the measurement result information.

31. The apparatus of claim 30, wherein the measurement result information comprises one or more of the following information:
identification information of the candidate anchor UE;
part of or all of information during performing a sidelink, SL, discovery procedure; or
a signal quality of the candidate anchor UE.

32. The apparatus of claim 29, further comprising:
a second sending module, used for sending the measurement result information to a positioning server device; and
a second obtaining module, used for obtaining anchor UE information sent from the positioning server device, wherein the anchor UE information is related to an anchor UE determined based on the measurement result information.

33. The apparatus of claim 32, further comprising:
a third sending module, used for sending positioning capability information of a target UE to the positioning server device.

34. The apparatus of claim 32, wherein in case that the positioning server device is a server UE, the measurement result information is sent to the server UE through one or more of the following messages:
a sidelink positioning protocol, SLPP, message;
a PC5-location services, PC5-LCS, message;
a PC5-signaling, PC5-S, message;
a PC5-radio resource control, PC5-RRC, message; or
a sidelink media access control control element, SL MAC CE, message.

35. The apparatus of claim 32, wherein in case that the positioning server device is a core network element, the measurement result information is sent to the core network element through one or more of the following messages:
a long term evolution positioning protocol, LPP, message;
a sidelink positioning protocol, SLPP, message;
a location services, LCS, message; or
a non-access stratum, NAS, message.

36. The apparatus of claim 29, wherein the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, wherein N is a positive integer;
an online candidate anchor UE;
a candidate anchor UE supporting establishing a sidelink, SL, unicast connection with a server UE; or
a candidate anchor UE supporting establishing a connection with a server location management function, LMF, of the target UE.

37. The apparatus of claim 29, wherein the first determining module is further used for:
determining a signal quality of a target object performing sidelink, SL, discovery or SL communication or SL broadcast or SL synchronization signal; and
determining a target object whose signal quality satisfies a first condition as the candidate anchor UE.

38. The apparatus of claim 37, wherein the first condition comprises one or more of the following conditions:
a signal quality is greater than a first threshold; or
a signal quality ranks top M among signal qualities sorted in a descending order, wherein M is a positive integer.

39. An apparatus for anchor user equipment, UE, determination, comprising:
a first obtaining module, used for obtaining measurement result information, sent from a target UE, determined after performing measurement on a candidate anchor UE;
a third determining module, used for determining an anchor UE based on the measurement result information, and generating anchor UE information; and
a first sending module, used for sending the anchor UE information to the target UE.

40. The apparatus of claim 39, further comprising:
a third obtaining module, used for obtaining positioning capability information of the target UE sent from the target UE.

41. The apparatus of claim 39, wherein the measurement result information comprises one or more of the following information:
identification information of the candidate anchor UE;
part of or all of information during performing a sidelink, SL, discovery procedure; or
a signal quality of the candidate anchor UE.

42. The apparatus of claim 39, wherein the anchor UE is a candidate anchor UE satisfying one or more of the following conditions:
a candidate anchor UE supporting a to-be-performed positioning way;
a candidate anchor UE having a known location;
a candidate anchor UE in a stationary state;
a candidate anchor UE whose moving speed is lower than a second threshold;
N candidate anchor UEs having a largest signal quality among signal qualities sorted based on the measurement result information, wherein N is a positive integer;
an online candidate anchor UE;
a candidate anchor UE supporting establishing a sidelink, SL, unicast connection with a server UE; or
a candidate anchor UE supporting establishing a connection with a server location management function, LMF, of the target UE.

43. A computer-readable storage medium, wherein the computer-readable storage medium stores a computer program, and the computer program is used to cause a computer to perform the method of any of claims 1 to 10, or the method of any of claims 11 to 14.
